Europäisches Patentamt

(19) European Patent Office

Office européen des brevets

(11) Publication number: **0 150 720**
**B1**

(12) **EUROPEAN PATENT SPECIFICATION**

(45) Date of publication of patent specification: **04.05.88**

(21) Application number: **85100124.8**

(22) Date of filing: **08.01.85**

(51) Int. Cl.⁴: **A 47 J 37/12**

(54) Fryer with electric heater for indirect heating.

(30) Priority: **20.01.84 IT 3400384 u**
**10.10.84 IT 3406184 u**

(43) Date of publication of application:
**07.08.85 Bulletin 85/32**

(45) Publication of the grant of the patent:
**04.05.88 Bulletin 88/18**

(84) Designated Contracting States:
**AT BE CH DE FR GB IT LI LU NL SE**

(56) References cited:
**FR-A-2 535 600**
**US-A-2 243 661**
**US-A-3 977 390**

(73) Proprietor: **ZANUSSI GRANDI IMPIANTI S.p.A.**
**via Giardini Cattaneo, 3**
**I-33170 Pordenone (IT)**

(72) Inventor: **Del Fabbro, Claudio**
**via Veneto 1**
**I-33080 Porcia Pordenone (IT)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

## Description

The present invention relates to a fryer, particularly for use in a community kitchen, provided with electric heater means for indirect heating of the frying oil or fat.

An electric fryer as disclosed in GB—A—1 111 090 comprises a stainless steel vessel a rear portion of which contains at least one armoured resistance heater hingedly mounted or guided in such a manner that in operation its active heater portion is completely immersed in the oil. In this manner one achieves direct heating of the oil, but because of the low heat transmission coefficient between the heater surface and the oil there occurs a considerable temperature difference of as much as 100°C or above between the heater surface and the oil. As a result, the oil in contact with the heater surface is subjected to a degradation process which, in addition to rendering the cleaning of.the resistance heater difficult, converts some of the oil to substances constituting particular health hazards.

A first solution to this problem consists in increasing the heat-transmitting surface area of the resistance heater(s) in proportion to its or their capacity so as to reduce the above noted temperature difference to acceptable values. This solution, however, requires the employ of resistance heaters having excessive dimensions and intricate shapes, thus complicating the design, the use and, above all, the periodic cleaning of the fryer.

It has also been tried to solve the above-noted problem by inserting an agitator element into the oil bath, but this solution only complicates the construction of the fryer without eliminating the difficulties with regard to cleaning, as the resistance heater is always immersed in the oil in use of the fryer.

Recently there has been proposed a solution making use of indirect heating, according to which the oil is heated in a separate container communicating with the vessel of the fryer and provided with means for forcedly circulating the oil between the vessel and the container. The electric resistance heaters are wound onto the outer wall surface of the container in intimate contact therewith, and possibly even welded or soldered thereto. This solution is advantageous in that it eliminates the shortcomings of fryers with direct heating thanks to the strong turbulence occurring in the heat exchange zone and resulting in a reduction of the temperature difference between the oil and the heating surface. On the other hand, this solution presents certain structural and functional difficulties. To be noted in the first place is the fact that the heating container, which is usually disposed with its axis vertical, is required to have a considerable axial length and thus occupies a considerable vertical space below the bottom of the vessel. In addition, the container has to be provided with an element mounted therein for agitating and circulating the oil and driven by an externally mounted motor.

For avoiding problems with regared to sealing the rotating shaft, the motor is preferably mounted above the level of the oil in the frying vessel, i.e. at an uncomfortable and not readily accessible location. Finally, regard should be had to optimum conditions for cleaning the container and particularly the means for forcedly circulating the oil, such conditions being unachievable, however, with the motor mounted at an elevated position.

It is an object of the present invention to overcome the above noted difficulties and to provide a fryer operating with indirect electric heating, wherein the container for heating the oil should be rationally integrated into the overall design of the fryer, and wherein the means for forcedly circulating the oil should be conveniently associated with said container so as to ensure proper operation and easy maintenance of the fryer and its parts.

The fryer according to the invention thus comprises a stainless steel vessel and a container located adjacent said vessel in communication therewith, said container being provided with electric heater means secured to its outer wall surface and with means for forcedly circulating the frying oil between said container and said vessel, said fryer being characterized in that said container is located adjacent the front side of the fryer and communicates with an expansion zone of said vessel, and in that said means for forcedly circulating the oil comprises a vaned shaft mounted coaxially in said container and having its lower end telescopingly coupled to an electric motor for driving said shaft, the upper end of said shaft being rotatably but non-slidably connected to a closure plug of said container, the engagement length of said lower end being smaller than the engagement length of said plug in said container.

This arrangement for heating and forcedly circulating the oil is capable of producing a considerable turbulence in the heat exchange zone, with the resultant reduction of the temperature difference between the heating surface and the frying oil, so as to avoid the degradation of the oil. This advantage is the more noticeable, the greater the number of vanes on said shaft and the closer the vanes extend towards the container wall. On the other hand, to obtain the maximum advantage would require an extremely accurate and thus costly construction of the rotor, i.e. of the vaned shaft. In addition, a great number of vanes would induce the entire mass of the oil to rotate, whereby the pumping effect would be reduced, resulting in a reduced circulation and excessive agitation of the oil, with the consequent oxydation thereof due to the formation of air bubbles.

A further object of the invention is thus the provision of a rotor of very simple construction and designed to be mounted and serviced in a simple manner while being capable of producing maximum turbulence in the flow of the frying oil preferably or solely in the zone immediately adjacent the wall of the heating assembly.

This object is attained according to the invention by a rotor having a central shaft carrying a plurality of radial vanes and characterized in that a plurality of rods extending substantially parallely to said shaft is secured to said vanes at a peripheral zone thereof proximate the heating wall.

In practical experiments it has been found that the employ of the rotor according to the invention permits very low temperature differences to be achieved between the heating wall and the oil flowing through the heater assembly so as to reduce the degradation of the oil.

These and other objects and advantages of the invention will become more clearly evident from the following description, given by way of example with reference to the accompanying drawings, wherein:

Fig. 1 shows a diagrammatic representation of a fryer according to a preferred embodiment of the invention,

Fig. 2 shows a diagrammatic representation of a fryer according to an alternative embodiment of the invention,

Fig. 3 shows a side view of a rotor employed in the fryer according to Fig. 1 or Fig. 2 and

Fig. 4 shows an end view of the rotor of Fig. 3.

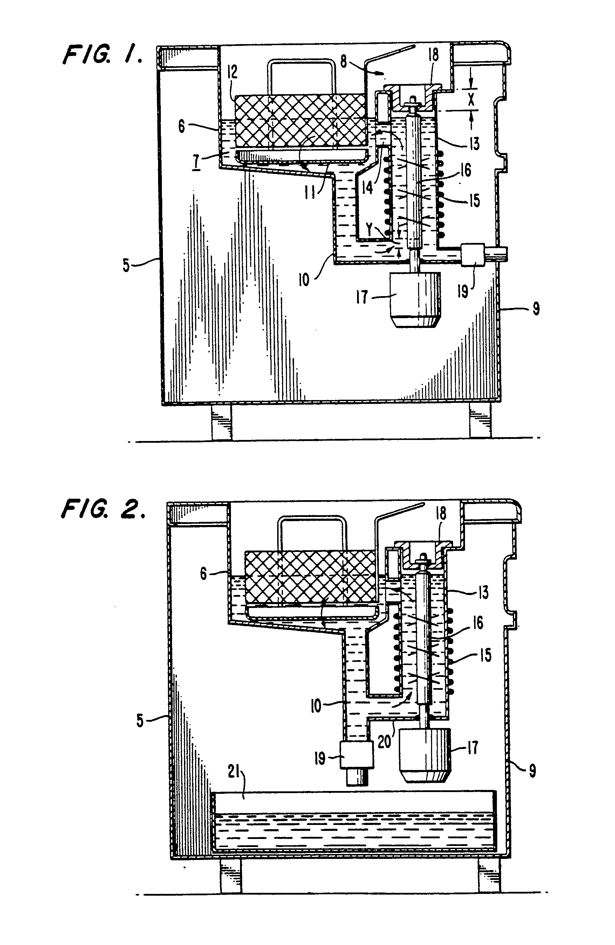

A fryer shown in Fig. 1 has a housing 5 containing a stainless steel vessel 6 for containing an oil bath 7 and formed with an expansion zone 8 adjacent the front side 9 of the fryer. The term "expansion zone 8" denotes a part of the vessel destined to contain the foam formed during the frying process and extending from the level of oil bath 7 to an overflow level. The lower portion of vessel 6 is provided with a discharge conduit 10 and filter 11 disposed on the inclined bottom of the vessel converging towards the opening of discharge conduit 10. Inserted into vessel 6 is a basket 12 for containing the food to be fried. A container 13 is mounted in the fryer adjacent the front side thereof, with its lower end in communication with discharge conduit 10 and its upper end connected to vessel 6 through a conduit 14. Container 13 is provided with electric resistance heaters 15 wound on its outer surface and secured thereto by welding or soldering, and contains a means for forcedly circulating the oil between container 13 and vessel 6. The forced circulation means comprises a vaned shaft 16 mounted coaxially in container 13 and having its lower end telescopingly engaged with an electric motor 17, while its upper end is rotatably but non-slidably connected to a closure plug 18 of container 13.

The length Y of the telescoping engagement of the lower end is smaller than the engagement length X of plug 18 in container 13 so as to ensure the safety of the operator on disassembly of the fryer for cleaning and maintenance purposes. The rotor including shaft 16 may thus be extracted from container 13 by lifting plug 18, the driving connection to motor 17 being released prior to the complete extraction of plug 18 from container 13 so as to exclude any danger to the operator. Motor 17 is disposed outside container 13. The shaft of motor 17 has to be provided with conventional sealing means for avoiding or at least controlling leakage of the heated oil.

Inserted in discharge conduit 10 downstream of container 13 is a normally closed discharge valve 19 permitting the oil to be discharged from vessel 6 and container 13 if so required for maintenance or repair of the fryer.

The fryer according to the invention offers the following advantages with regard to efficiency and facility of operation: The indirect heating of the oil in combination with the forced circulation ensures a uniform temperature of the oil bath and reduces the danger of degradation of the oil, with the resultant advantages as regards the quality of the prepared foods. The arrangement of container 13 with the associated means for heating and forcedly circulating the oil at a forward location of the fryer and in outlet communication with the expansion zone, and the location of the motor below the container ensure optimum accessibility of the container and its connecting passages for cleaning and maintenance purposes. The telescope-type coupling of the elements of the forced circulation means permits the associated parts to be readily disassembled without any danger to the operator. The different lengths of the upper and lower mountings of shaft 16 are effective to ensure uncoupling of shaft 16 from motor 17 prior to the extraction of the rotor from container 13.

Fig. 2 shows an alternative embodiment of the fryer according to the invention. This embodiment differs from the one shown in Fig. 1 mainly in that discharge conduit 10 is extended downwards in the front portion of the fryer. In this case, oil heating container 13 is no longer directly inserted in discharge conduit 10, but connected thereto via a short inlet conduit 20. This embodiment further permits a receptacle 21 to be placed into the lower portion of housing 5 for collecting the oil discharged by opening valve 19. In comparison to the one shown in Fig. 1, the Fig. 2 embodiment has the slight disadvantage that inlet conduit 20 is not as readily accessible for cleaning and inspection.

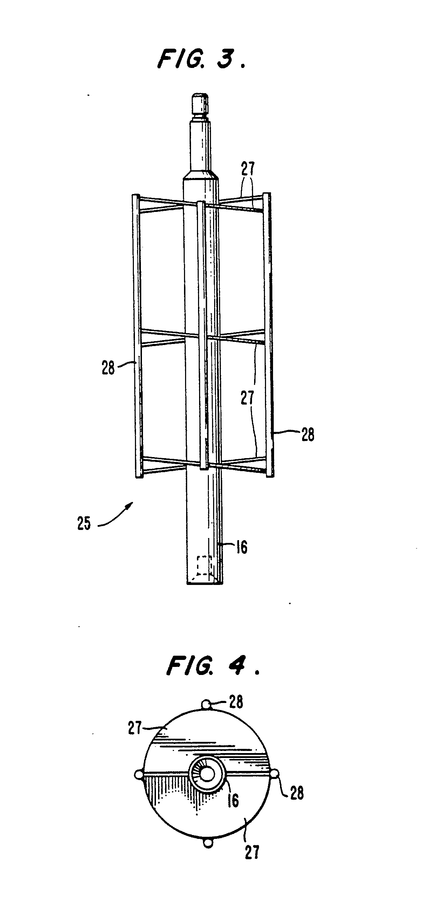

According to a further characteristic of the invention, shown in Figs. 3 and 4, a rotor 25 is formed by shaft 16 having a plurality of radial vanes welded thereto. Vanes 27 are preferably of semicircular shape and arranged at inclined positions with respect to the axis of shaft 16. Otherwise vanes 27 are arranged in pairs opposite one another and at equal spacings along the length of shaft 16.

For proper operation of the rotor three pairs of vanes are sufficient, it being evident, however, that the number, the shape and the arrangement of the vanes may be adapted to the requirements of any given fryer and of the associated arrangement for heating and circulating the oil.

According to a particularly simple and economical embodiment, a plurality of rods 28 is welded to the free ends of vanes 27 in spaced relation and substantially parallel to the axis of shaft 16. There are preferably four rods 28 located at diametrally opposite positions with respect to the axis of shaft 16.

As an alternative, rods 28 may be directly connected to shaft 16 through radial links. In any case the rods have to be mounted for rotation together with the remainder of the rotor and should be disposed in the peripheral zone of the vanes as close as possible to the heating wall.

Rotor 25 is obviously of very simple construction and desinged for simple and efficient employ in an oil heating and circulating arrangement of the type described.

In practical experiments it has been shown that in operation the rotor according to the invention exerts an efficient pumping effect for the circulation of the oil between the heating arrangement and the vessel of the fryer. In addition, the rods 28 disposed peripherally of vanes 27 are effective to induce a violent turbulence in the oil flow adjacent the heat exchange wall of the heating contrainer, while the overall turbulence of the oil flow remains relatively low. This arrangement minimizes the danger of oxydation of the oil due to the formation of air bubbles. In addition, the temperature difference $\Delta T$ between the heating wall and the oil is reduced to very low values in the order of 20 to 30°C, so that the degradation of the oil, and thus the consumption thereof, is minimized.

## Claims

1. A fryer having an electric heater (15) for indirect heating of the frying oil, particularly for use in a community kitchen, comprising a stainless steel vessel (6) and a container (13) located adjacent said vessel (6) in communication therewith, said container (13) being provided with electric heater means secured to its outer wall surface and with means (16) for forcedly circulating the oil between said container and said vessel, characterized in that said container (13) is located adjacent the front side (9) of the fryer and communicates with an expansion zone (8) of said vessel (6), and in that said means for forcedly circulating the oil comprise a rotor (16) mounted coaxially in said container (13) and having its lower end telescopingly coupled to an electric motor (17) for driving the rotor, the upper end of said rotor being rotatably but not slidably connected to a closure plug (18) of said container, the engagement length (Y) of said lower end being smaller than the engagement length (X) of said closure plug (18) with said container (6).

2. A fryer according to claim 1, wherein said oil heating container communicates with said vessel through an upper and a lower passage, characterized in that the lower passage connecting said vessel (6) to said container (13) is formed by a least a part of a discharge conduit (10) of said vessel provided with a discharge valve (19).

3. A fryer according to claim 2, wherein said vessel has a recessed bottom converging towards the opening of the discharge condit, characterized in that the bottom of said vessel (6) supports a filter (11) arranged to cover the opening of said discharge conduit (10).

4. A fryer according to claim 3, characterized in that the lower passage connecting said vessel (6) to said container (13) acts as an inlet of said container for the oil provenient from said vessel, and in that said upper passage acts as a return passage for the oil from said container to said vessel and opens into a forward portion of said vessel below the level of the oil contained therein.

5. A fryer according to claim 1, wherein said rotor comprises a central shaft provided with a plurality of radial vanes, characterized in that a plurality of rods (28) extending substantially parallely to said shaft (16) is secured to said vanes (27) at a peripheral zone thereof proximate the heating wall.

6. A fryer according to claim 5, characterized in that said rods (28) are welded to the free edges of said vanes (27) in spaced relationship to said shaft (16).

7. A fryer according to claim 5, characterized in that said vanes (27) are of semicircular shape and located in pairs opposite one another at inclined positions with respect to the axis of said shaft (16), said pairs being disposed at equal spacings along the length of said shaft.

8. A fryer according to claim 5, characterized in that said rods (28) are disposed at diametrally opposite positions with respect to the axis of sais shaft (16).

## Patentansprüche

1. Friteuse mit einem elektrischen Heizer (15) für die indirekte Erwärmung des Fritieröls, speziell zur Verwendung in einer Gemeinschaftsküche, enthaltend einen Edelstahlkessel (6) und einen Behälter (13), der dem Kessel (6) benachbart angeordnet und mit diesem verbunden ist, wobei der Behälter (13) mit einer elektrischen Heizeinrichtung, die auf seiner Außenwandfläche befestigt ist, und mit einer Einrichtung (16) zum zwangsweisen Umwälzen des Öls zwischen dem Behälter und dem Kessel versehen ist, dadurch gekennzeichnet, daß der Behälter (13) benachbart der Vorderseite (9) der Friteuse angeordnet ist und mit einer Expansionszone (8) des Kessels (6) in Verbindung steht, und daß die Einrichtung zur Zwangsumwälzung des Öls einen Rotor (16) enthält, der koaxial in dem Behälter (13) angeordnet ist und mit seinem unteren Ende teleskopartig mit einem Electromotor (17) zum Antreiben des Rotors gekuppelt ist, wobei das obere Ende des genannten Rotors drehbar, jedoch nicht gleitbar mit einem Verschulßstopfen (18) des Behälters verbunden ist, wobei die Eingriffslänge (Y) des unteren Endes kleiner als die Eingriffslänge (X) des Verschlußstopfens (18) in dem Behälter (6) ist.

2. Friteuse nach Anspruch 1, bei der der ölheizbehälter mit dem Kessel über eine obere und eine untere Leitung in Verbindung steht, dadurch gekennzeichnet, daß die untere Leitung, die den Kessel (6) mit dem Behälter (13) verbindet, von wenigstens einem Teil einer Auslaßleitung (10) des Kessels gebildet ist, die mit einem Auslaßventil (19) versehen ist.

3. Friteuse nach Anspruch 2, bei der der Kessel einen vertieften Boden hat, der gegen die Öffnung der Auslaßleitung konvergiert, dadurch gekennzeichnet, daß der Boden des Kessels (6) ein Filter (11) trägt, das dazu vorgesehen ist, die Öffnung der Auslaßleitung (10) zu bedecken.

4. Friteuse nach Anspruch 3, dadurch gekennzeichnet, daß die untere Leitung, die den Kessel (6) mit dem Behälter (13) verbindet, als ein Einlaß des Behälters für das aus dem Kessel stammende Öl dient, und daß die obere Leitung als eine Rücklaufleitung für das Öl aus dem Behälter zum Kessel dient und sich in einen vorderen Abschnitt des Kessels unterhalb des Pegels des darin enthaltenen Öls öffnet.

5. Friteuse nach Anspruch 1, bei der der Rotor eine zentrale Welle enthält, die mit einer Vielzahl von radialen Flügeln versehen ist, dadurch gekennzeichnet, daß eine Vielzahl von Stäben (28), die sich im wesentlichen parallel zu der Welle (16) erstrecken, an den Flügeln an einer Umfangszone derselben nahe der Heizwand befestigt ist.

6. Friteuse nach Anspruch 5, dadurch gekennzeichnet, daß die Stäbe (28) an den freien Rändern der Flügel (27) im Abstand zur Welle (16) angeschweißt sind.

7. Friteuse nach Anspruch 5, dadurch gekennzeichnet, daß die Flügel (27) von halbkreisförmiger Gestalt sind und in Paaren einander gegenüberstehend und in geneigten Positionen in bezug auf die Achse der Welle (16) angeordnet sind, wobei die genannten Paare in gleichen Abständen längs der Länge de Welle angeordnet sind.

8. Friteuse nach Anspruch 5, dadurch gekennzeichnet, daß die Stäbe (28) an diametral gegenüberliegenden Stellen in bezug auf die Achse der Welle (16) angeordnet sind.

**Revendications**

1. Friteuse ayant un élément de chauffage électrique (15) pour chauffer indirectement l'huile de friture, destinée notamment à son utilisation dans une cuisine de collectivité, comprenant une cuve en acier inoxydable (6) et un réservoir (13) au voisinage immédiat de cette cuve (6) et communiquant avec elle, ce réservoir (13) étant équipé de moyens de chauffage électrique fixés sur la surface extérieure de sa paroi et d'un dispositif (16) pour faire circuler l'huile entre le réservoir et la cuve, caractérisée en ce que ce réservoir (13) est disposé au voisinage immédiat du côté avant (9) de la friteuse et communique avec une zone d'expansion (8) de cette cuve (6) et en ce que les moyens, pour faire circuler l'huile, comprennent un rotor (16) monté dans l'axe du réservoir (13) et dont l'extrémité inférieure est couplée de façon télescopique à un moteur électrique (17) pour entraîner le rotor, l'extrémité supérieure de ce rotor étant reliée à un tampon d'obturation (18) de ce réservoir, de façon que le rotor puisse tourner, mais non coulisser, la longueur de coopération (Y) de cette extrémité inférieure étant plus petite que la longueur de coopération (X) de ce tampon d'obturation (18) avec le réservoir (13).

2. Friteuse selon la revendication 1, dans laquelle le réservoir de chauffage de l'huile communique avec la cuve par l'intermédiaire d'un passage supérieur et d'un passage inférieur, caractérisée en ce que le passage inférieur reliant la cuve (6) au réservoir (13) est formé par au moins une partie d'un conduit d'évacuation (10) de cette cuve équipé d'une vanne d'évacuation (19).

3. Friteuse selon la revendication 2, dans laquelle la cuve a un fond évidé convergeant en direction de l'ouverture du conduit d'évacuation, caractérisée en ce que le fond de la cuve (6) supporte un filtre (11) disposé pour recouvrir l'ouverture de ce conduit d'évacuation (10).

4. Friteuse selon la revendication 3, caractérisée en ce que le passage inférieur reliant la cuve (6) au réservoir (13) sert d'entrée au réservoir pour l'huile provenant de la cuve et en ce que le passage supérieur sert de passage de retour pour l'huile en provenance du réservoir vers la cuve et s'ouvre dans une portion avant de cette cuve endessous du niveau de l'huile contenue dans la cuve.

5. Friteuse selon la revendication 1, dans laquelle le rotor comporte un arbre central équipé d'une multiplicité de palettes radiales, caractérisée en ce que plusieurs tiges (28) s'étendent pratiquement parallèlement à l'arbre (16) et sont fixées sur les palettes (27) au niveau d'une zone périphérique de celle-ci proche de la paroi chauffante.

6. Friteuse selon la revendication 5, caractérisée en ce que ces tiges (28) sont soudées sur les bords libres des palettes (27) à distance de l'arbre (16).

7. Friteuse selon la revendication 5, caractérisée en ce que les palettes (27) ont une forme semi-circulaire et sont disposées par paires en vis-à-vis l'une de l'autre et en oblique par rapport à l'axe de l'arbre (16), ces paires étant disposées à intervalles égaux sur la longueur de l'arbre.

8. Friteuse selon la revendication 5, caractérisée en ce que les tiges (28) sont disposées en des positions diamétralement opposées par rapport à l'axe de l'arbre (16).

FIG. 1.

FIG. 2.

# FIG. 3.

# FIG. 4.